# EUROPEAN PATENT APPLICATION

(11) **EP 4 418 014 A1**
(43) Date of publication of application: **21.08.2024**
(21) Application number: 22906251.8
(22) Date of filing: 29.11.2022
(51) Int. Cl.: G01S 17/86, B61L 23/04

(54) **TRAIN ACTIVE OBSTACLE DETECTION METHOD AND APPARATUS BASED ON POSITIONING TECHNOLOGY**

(30) Priority: 14.12.2021 CN 202111529867
(71) Applicant: Casco Signal Ltd., Shanghai 200435 (CN)
(72) Inventor: CUI, Hongzhou, Shanghai 200435 (CN); JIANG, Yaodong, Shanghai 200435 (CN); HAN, Hailiang, Shanghai 200435 (CN); YANG, Yang, Shanghai 200435 (CN); LI, Yun, Shanghai 200435 (CN)
(74) Representative: Sun, Yiming
(86) International application number: PCT/CN2022/134991
(87) International publication number: WO 2023/109501

(57) **Abstract**

The invention relates to an active train obstacle detection method and apparatus based on a positioning technique. The active train obstacle detection method comprises the following steps: S1, acquiring an electronic map; S2, correcting initial parameters; S3, performing parameter calibration of a video camera; S4, detecting a train obstacle; and S5, outputting an obstacle recognition result. The apparatus comprises a positioning module, a Lidar detection module, a video recognition module, an computing host and an interface module, wherein the computing host is connected to the positioning module, the Lidar detection module, the video recognition module and the interface module respectively. Compared with the prior art, the invention can increase the obstacle detection rate and reduce report failures and errors.

## Description

### BACKGROUND OF THE INVENTION

### 1. Technical Field

The invention relates to train signal control systems, in particular to an active train obstacle detection method and apparatus based on a positioning technique.

### 2. Description of Related Art

In the rail transit field, it becomes ever more important to detect obstacles in front of trains with the increase of the running speed and frequency of trains. Traditional train control methods find obstacles in front of trains mainly by visual observation of drivers and have the problems of negligence caused by distraction and reduction in the ability to concentrate caused by fatigue.

At present, passive obstacle detection devices for vehicles adopt a contact lever to touch an obstacle to drive a corresponding sensor, which then performs sensing. These passive obstacle detection devices have the defects of a short operating distance and the absence of a warning time. The development of the driverless technology of rail transit allows the intelligent driving system to provide more and more functions to gradually take the place of drivers. The GOA4-level unmanned system enables trains to operate without being attended by drivers and even without cabs. Therefore, it is necessary to develop a novel obstacle detection technique to replace driver's visual observation to realize environmental perception and remote warning to give an alarm before a train collides with an obstacle and take appropriate measures.

The development of the driverless technology of automobiles promotes the emergence of increasing more obstacle detection methods such as the video recognition method, the Lidar SLAM modeling method, the millimeter-wave radar and ultrasonic radar detection method, and the combination of these methods. The driverless technology of automobiles and the driverless technology of rail transit are different in many aspects, and the most remarkable one is that the automobiles run on roads and may overtake, so trajectories of the automobiles are uncertain, while there is no flat road for rail transit and trains run on specific railways, so the tracks and attitudes of the trains are repetitive. By means of these characteristics of rail transit, the sensing and detection technology in the rail transit field can be greatly simplified. In the rail transit field, an intelligent obstacle detection method comprises two steps: recognition of a rail operation region, and detection of an obstacle. Only when the obstacle is located in the rail operation region, the running safety will be endangered, and an alarm needs to be given. The warning distance of the obstacle is related to the recognition distance of the rail operation region and the detection distance of the obstacle, and the minimum value of the recognition distance of the rail operation region and the minimum value of the detection distance of the obstacle determine the farthest warning distance. Hence, the improvement of the recognition distance of the rail operation region is of great significance for the improvement of the warning distance.

Therefore, how to realize high-accuracy detection of obstacles in front of trains in the existing rail transit field by fully using the positioning technique, the Lidar technique and the video recognition technique is a technical issue urgently to be addressed.

### BRIEF SUMMARY OF THE INVENTION

The objective of the invention is to overcome the abovementioned defects in the prior art by providing an active train obstacle detection method and apparatus based on a positioning technique.

The objective of the invention may be fulfilled by the following technical solution:
In a first aspect, the invention provides an active train obstacle detection method based on a positioning technique, comprising the following steps:
S1, acquiring an electronic map;
S2, correcting initial parameters;
S3, performing parameter calibration of a video camera;
S4, detecting a train obstacle; and
S5, outputting an obstacle recognition result.

As a preferred technical solution, in S1, acquiring an electronic map specifically comprises: acquiring an electronic map using different acquisition methods according to different positioning techniques.

As a preferred technical solution, acquiring an electronic map using different acquisition methods according to different positioning techniques specifically comprises:
(101) for a point positioning technique, acquiring an electronic map by means of trains running on railways or by converting an existing railway line data file; or
(102) for a SLAM positioning technique, enabling a train to run along all railways at least once to record features of all rail operation regions, and generating an electronic railway map.

As a preferred technical solution, in S2, correcting initial parameters specifically comprises:
correcting the initial parameters to realize registration of a coordinate system of a Lidar and a coordinate system of the electronic map to enable trajectories of tracks to overlap with actual railways in the coordinate system of the Lidar.

As a preferred technical solution, the initial parameters comprise translations XYZ and rotations YPR.

As a preferred technical solution, in S3, by performing parameter calibration of the video camera, a transformational relation between two-dimensional coordinates of images acquired by the video camera, three-dimensional coordinates of a real world and a coordinate system of a Lidar is figured out.

As a preferred technical solution, in S4, detecting a train obstacle specifically comprises:
S401, acquiring point cloud data in front by a Lidar, acquiring image data in front by the camera, and inputting the point cloud data and the image data to an computing host;
S402, outputting a current position by a positioning module, finding a corresponding position in the electronic map by matching, and acquiring coordinates and attitude data of a positioning point according to the corresponding position;
S403, inquiring information of a rail operation region in front of the positioning point according to the coordinates of the positioning point and a direction of travel, obtaining data of the rail operation region in front of the positioning point, and forming a three-dimensional rail operation region;
S404, transforming the rail operation region into a coordinate system of the Lidar, plotting the rail operation region in a laser point cloud, and detecting whether there is an obstacle in the rail operation region by a point cloud processing algorithm;
S405, projecting the rail operation region into a coordinate system of a video image according to calibrated parameters of the video camera, plotting the rail operation region in the video image, and detecting whether there is an obstacle in the rail operation region by a video recognition algorithm; and
S406, fusing obstacle information output by the Lidar and obstacle information output by video recognition, outputting finally confirmed obstacle information, and sending the obstacle information to an interface module.

As a preferred technical solution, in S402, if the positioning module is able to output attitude data, and the attitude data output by the positioning module are used.

As a preferred technical solution, in S405, a video recognition module is able to directly run a rail operation region recognition algorithm to automatically recognize the information of the rail operation region and then run the video recognition algorithm to detect whether there is an obstacle in the rail operation region.

As a preferred technical solution, the obstacle information output in S406 comprises a type, size, distance, direction and collision probability of an obstacle.

As a preferred technical solution, in S5, the interface module gives a corresponding response according to obstacle recognition information, wherein the response comprises audible and visual alarming, whistling, normal braking, emergency braking, log recording, and remote message sending.

As a preferred technical solution, in a case of multiple tracks, the active train obstacle detection method based on a positioning technique specifically comprises:
(a) acquiring, from a ground interlocking system, route information in front, figuring out a direction of a turnout from the route information, then determining a track where a train is about to run, and extending a rail operation region to the determined track; or
(b) determining the direction of the turnout by a video recognition method, and selecting a corresponding track, wherein the video camera is able to recognize, according to the position of a turnout gap, whether the turnout is located at a normal position or a reverse position and then inform a video recognition module and a Lidar detection module to select the corresponding track; and in a case of multiple turnouts, the turnouts are recognized in sequence to select the corresponding track.

In a second aspect, the invention provides an apparatus used for the active train obstacle detection method based on a positioning technique, comprising a positioning module, a Lidar detection module, a video recognition module, an computing host and an interface module, wherein the computing host is connected to the positioning module, the Lidar detection module, the video recognition module and the interface module respectively.

As a preferred technical solution, the positioning module is configured to acquire a real-time position of a train and adopts one or more positioning techniques, wherein the positioning techniques comprise GNSS positioning, Lidar-based SLAM positioning, video-based VSLAM positioning, dead-reckoning positioning based on inertia navigation equipment, and integrated positioning based on wheel odometer sensors, beacon transponders and Doppler speed sensors.

As a preferred technical solution, the Lidar detection module is mounted in front of a vehicle and configured to acquire a three-dimensional scanning point cloud in front of the vehicle to determine a size, direction and distance of an obstacle.

As a preferred technical solution, the video recognition module is mounted in front of the vehicle and configured to acquire colored image information in front of the vehicle and transmit the colored image information to the computing host; and the video recognition module is able to automatically adjust exposure parameters according to a change in illuminance to ensure that a clear image is obtained.

As a preferred technical solution, the computing host is configured to process received positioning data, Lidar data and video image data and output an obstacle detection result to the interface module.

As a preferred technical solution, the interface module is configured to receive the obstacle detection result output by the computing host and perform corresponding operations, including audible and visual alarming, whistling and output braking, according to settings.

In a third aspect, the invention provides an electronic device, comprising a memory and a processor, wherein a computer program is stored in the memory, and when executing the computer program, the processor implements the active train obstacle detection method based on a positioning technique.

In a fourth aspect, the invention provides a computer-readable storage medium having a computer program stored therein, wherein the active train obstacle detection method based on a positioning technique is implemented when the computer program is executed.

Compared with the prior art, the invention has the following advantages:
1. In the invention, the transformational relation for transformation from an track coordinate system to a sensor coordinate system is established, electronic map information of a rail operation region can be transformed into a corresponding sensor coordinate system, and transformation from the sensor coordinate system to the track coordinate system can also be realized.
2. In the invention, positioning and attitude measurement of a train can be realized by means of a GNSS positioning receiver, and then the moving trajectory of the train is recorded to form an electronic railway map.
3. In the invention, the recognition distance of a rail operation region can be flexibly set by software and can exceed a distance provided by the video recognition algorithm for the rail operation region. The rail operation region is a rail operation region within the three-dimensional space, such that the width and height of the rail operation region can be adjusted easily.
4. The invention can correctly recognize a rail operation region in a case of multiple tracks in a station yard, and reduces report errors of trains and personnel of adjacent tracks.
5. The invention provides an active train obstacle detection scheme which can detect obstacles in front of trains to give an alarm in advance.
6. The invention adopts a video and Lidar fusion detection method which is suitable for various scenarios such as daytime and night, thus increasing the obstacle detection rate and reducing report failures and errors.

### BRIEF DESCRIPTION OF THE SEVERAL VIEWS OF THE DRAWINGS

FIG. 1 is a structural block diagram of an apparatus according to the invention;
FIG. 2 is a schematic diagram of processing logic modules in an computing host according to the invention.
FIG. 3 is a schematic diagram of transformation of coordinate systems according to the invention;
FIG. 4 is a schematic diagram of turnouts in a station yard according to the invention.

### DETAILED DESCRIPTION OF THE INVENTION

The technical solutions of the embodiments of the invention will be clearly and completely described below in conjunction with the accompanying drawings of the embodiments of the invention. Obviously, the embodiments in the following description are merely illustrative ones, and are not all possible ones of the invention. All other embodiments obtained by those ordinarily skilled in the art according to the following ones without creative labor should also fall within the protection scope of the invention.

The invention provides an instance, which can detect an obstacle in front of a train in the rail transit field by means of the positioning technique, the Lidar technique and the video recognition technique, and in a station yard with multiple tracks, can determine a track where the train is located by accurate positioning and determine a turnout in front of the train by video recognition or route information to intelligently determine whether there is an obstacle in a track where the train is about to run, thus avoiding report errors caused by obstacles such as vehicles or personnel in other tracks.

The invention provides an active train obstacle detection method based on a positioning technique, which specifically comprises the following steps:

### S1, acquisition of an electronic map

In the instance, a GNSS positioning receiver, which can output the current position and direction of a train at a high frequency and accuracy, is used as a positioning module. A train continuously runs on a railway for a period of time, and output data of the GNSS positioning receiver are recorded to obtain a trajectory of the train (a description of geometric characteristics of the railway). If the train passes through a same turnout multiple times and the turnout is in different states, trajectories of multiple tracks can be obtained, and track information of a whole station yard can be obtained finally.

### S2, correction of initial parameters

After installation, parameters such as the distance from a satellite antenna to a Lidar, the distance from the satellite antenna to a camera, and the direction (translations XYZ and rotations YPR) are measured. After these parameters are obtained, the boundary of a rail operation region in front of the train can be transformed into a coordinate system of the Lidar or the camera.

### S3, parameter calibration of a video camera

Projection parameters of a lens of the camera are obtained by a camera internal parameter calibration method, and reference data about the related calibration method has been disclosed online. The camera and the radar are calibrated by means of an object in the common visual field, coordinates of the same points in the coordinate system of the camera and the coordinate system of the radar are recorded respectively, and a transformation matrix is resolved reversely. In actual use, more groups of corresponding coordinates can be acquired, a group of initial values are set, and the optical solution is resolved by an iterative optimization algorithm. Radar-to-camera transformation parameters are obtained.

### S4, obstacle detection

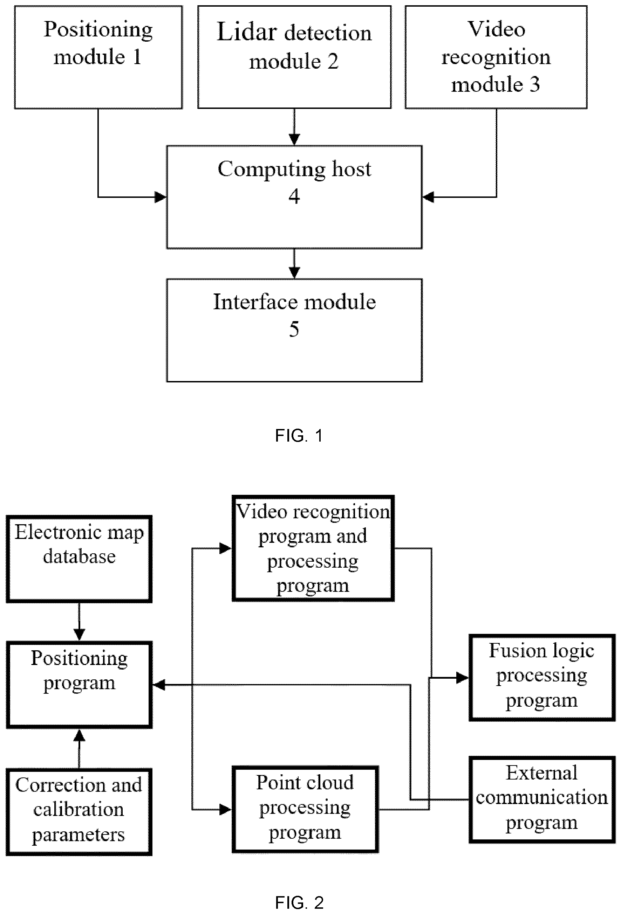

An obstacle detection module comprises an computing host, which comprises one or more host with a powerful operational capacity; a positioning program, a video processing program, a Lidar processing program, a fusion logic processing program and an external communication program are configured in the computing host to process different contents, and electronic map data, correction and calibration parameters, and other data are also stored in the computing host, as shown in FIG. 2.

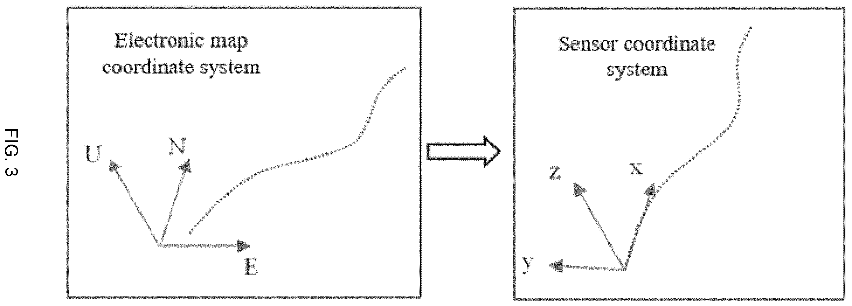

When a train runs on the railway, the positioning module outputs positioning information, which is processed by the computing host to generate information of a rail operation region in front of the train, and the information of the rail operation region in front of the train is sent to the Lidar processing program and the video recognition program; coordinates of the rail operation region are transformed from a ground coordinate system to a sensor coordinate system, as shown in FIG. 3; then, the Lidar processing program and the video recognition program respectively detect whether there is an obstacle in the rail operation region in front of the train and output results to the fusion logic processing program; and the fusion logic processing program determines whether there is an obstacle according to a set fusion logic and outputs a result to an interface module.

The external communication program in the computing host is configured to acquire route information provided by an interlocking system and send the route information to the positioning program to determine which track should be selected as the rail operation region in case of a turnout in the station yard.

### S5, output of an obstacle recognition result

When an obstacle is detected, a detection result is output to the interface module (the interface module 5 in FIG. 1), and the interface module determines an output such as audible and visual alarming, whistling, normal braking, emergency braking, log recording or remote message sending. In this embodiment where audible and visual alarming and log recording are selected, a flashing icon will be displayed on a screen, and a prompt tone will be played at the same time to remind a driver of an obstacle in front; and image information and obstacle information of this alarm will be recorded for later analysis.

### S6, processing in case of multiple tracks

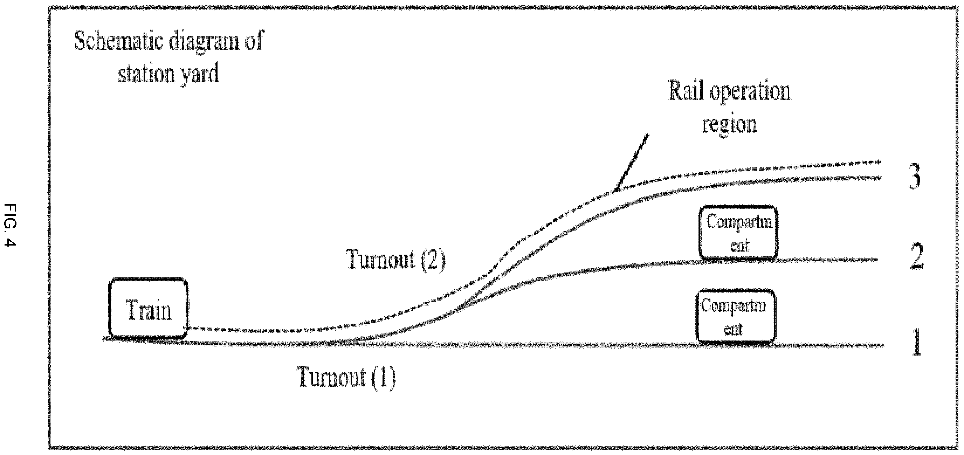

When the train runs through a region with multiple tracks, the route of the train needs to be determined according to turnout information. As shown in FIG. 4, there are a turnout (1) and a turnout (2) in front of the train, a track 1 and a track 2 have been occupied by compartments parked thereon, the train should run along track 3, and the positioning program needs to obtain these data and generate correct information of the rail operation region (the track indicated by the dotted line). The turnout information can be obtained in the following two ways: 1, the external communication program acquires route information from the interlocking system or a related system thereof to obtain the turnout information and direction; 2, the video recognition program runs an intelligent turnout recognition program to recognize the direction of the turnout (1), then switch the track of the train to the track 1, then recognize the turnout (2), and then switch the track of the train to the track 3. The recognition program sends a recognition result to the positioning program, and the positioning program outputs correct information of the rail operation region (the track indicated by the dotted line in FIG. 4).

This embodiment is merely used for explaining the practicability of the active train obstacle detection method and system and does not indicate that the system must be implemented according to this embodiment, and other implementations of the invention can be obtained simply by adding or reducing modules, for example, by adding or reducing modules of the camera, or adding or reducing modules of the laser-radar. In addition, the combination and change of positioning techniques, such as the change of various satellite receivers, the change of inertia navigation equipment, and the change or adding of various displacement sensors, speed sensors, angle sensors, angular speed sensors and acceleration sensors are also within the permissible scope of the invention.

In the invention, an electronic map coordinate system of the rail operation region is transformed to a sensor coordinate system. It can be known by mathematical derivation that the sensor coordinate system can also be transformed to the coordinate system of the rail operation region by a simple formula, and such a transformation should not be construed as an innovation and should also fall within the protection scope of the invention.

The embodiment of the method is introduced above, and the technical solution of the invention will be further described with reference to an embodiment of an apparatus.

As shown in FIG. 1, an apparatus used for the active train obstacle detection method based on a positioning technique comprises a positioning module 1, a Lidar detection module 2, a video recognition module 3, an computing host 4 and an interface module 5, wherein the computing host 4 is connected to the positioning module 1, the Lidar detection module 2, the video recognition module 3 and the interface module 5 respectively.

As a preferred technical solution, the he positioning module 1 is configured to acquire the real-time position of a train and adopts GNSS positioning, Lidar-based SLAM positioning, video-based VSLAM positioning, dead-reckoning positioning based on inertia navigation equipment, and integrated positioning based on wheel speed sensors, beacon transponders and Doppler speed sensors.

The Lidar detection module 2 is mounted in front of a vehicle and configured to acquire a three-dimensional scanning point cloud in front of the vehicle to determine the size, direction and distance of an obstacle.

The video recognition module 3 is mounted in front of the vehicle and configured to acquire colored image information in front of the vehicle and transmit the colored image information to the computing host; the video recognition module 3 is able to automatically adjust exposure parameters according to a change in light intensity to ensure that a clear image is obtained.

The computing host 4 is configured to process received positioning data, Lidar data and video image data and output an obstacle detection result to the interface module.

The interface module 5 is configured to receive the obstacle detection result output by the computing host and perform corresponding operations, including audible and visual alarming, whistling and output braking, according to settings.

Those skilled in the art can clearly know that to facilitate and simplifying the description, the specific operating process of the modules described above can be understood with reference to corresponding processes in the embodiment of the method mentioned above and will not be repeated here.

An electronic device provided by the invention comprises a central processing unit (CPU), which can perform various appropriate actions and processing according to computer program instructions stored in a read only memory (ROM) or computer program instructions loaded into a random access memory (RAM) from a storage unit. Various programs and data required for operations of the device can also be stored in the RAM. The CPU, ROM and RAM are connected by means of a bus. An input/output (I/O) interface is also connected to the bus.

Multiple components in the device are connected to the I/O interface, including an input unit such as a keyboard or a mouse; an output unit such as various displays or speakers; a storage unit such as a magnetic disk or a compact disc; and a communication unit such as a network card, a modem or a wireless communication transceiver. The communication unit allows the device to exchange information/data with other devices by means of, for example, computer networks based on the internet and/or various telecommunication networks.

The processing unit performs the steps and processing described above, such as the method S1-S6. For example, in some embodiments, the method S1-S6 can be implemented as a computer software program, which is tangibly stored in a machine-readable medium such as the storage unit. In some other embodiments, the computer program may be partially or entirely loaded and/or installed on the device by means of the ROM and/or the communication unit. When the computer program is loaded into the RAM and executed by the CPU, one or more of the steps of the method S1-S6 described above can be performed. Alternatively, in other embodiments, the CPU can be configured to implement the method S1-S6 in any other appropriate ways (such as, by means of firmware).

At least part of the functions described above can be performed by one or more hardware logic components. For example, non-restrictively, illustrative hardware logic components that can be used include: a field programmable gate array (FPGA), an application-specific integrated circuit (ASIC), an application-specific standard product (ASSP), a system on chip (SOC), a complex programmable logic device (CPLD), and the like.

Program codes for implementing the method of the invention may be written in one programming language or any combination of multiple programming languages. These program codes can be provided to a processor or a controller of a general-purpose computer, a special-purpose computer or other programmable data processing devices, such that when the program codes are executed by the processor or controller, the functions/operations specified in the flow diagram and/or block diagram are performed. The program codes may be entirely executed on a machine, partially executed on a machine, partially executed on a machine as an independent software package and partially executed on a remote machine, or entirely executed on a remote machine or server.

In the context of the invention, the machine-readable medium may be a tangible medium, and may comprise or store a program, which is used by or in conjunction with an instruction execution system, apparatus or device. The machine-readable medium may be a machine-readable signal medium or a machine-readable storage medium. The machine-readable medium may comprise, but is not limited to, electronic, magnetic, optical, electromagnetic, infrared or semiconductor systems, apparatuses or devices, or any suitable combinations thereof. More specific examples of the machine-readable storage medium comprise an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any combinations thereof.

The above embodiments are merely specific ones of the invention, and the protection scope of the invention is not limited to the above embodiments. Any skilled in the art can easily think of various equivalent modifications or substitutions within the technical scope disclosed by the invention, and all these equivalent modifications or substitutions should fall within the protection scope of the invention. Therefore, the protection scope of the invention should be subject to the protection scope of the claims.

## Claims

1. An active train obstacle detection method based on a positioning technique, comprising the following steps:
S1, acquiring an electronic map;
S2, correcting initial parameters;
S3, performing parameter calibration of a video camera;
S4, detecting a train obstacle; and
S5, outputting an obstacle recognition result.

2. The active train obstacle detection method based on a positioning technique according to Claim 1, wherein in S1, acquiring an electronic map specifically comprises: acquiring an electronic map using different acquisition methods according to different positioning techniques.

3. The active train obstacle detection method based on a positioning technique according to Claim 2, wherein acquiring an electronic map using different acquisition methods according to different positioning techniques specifically comprises:
(101) for a point positioning technique, acquiring an electronic map by means of trains running on railways or by converting an existing railway line data file; or
(102) for a SLAM positioning technique, enabling a train to run along all railways at least once to record features of all rail operation regions, and generating an electronic railway map.

4. The active train obstacle detection method based on a positioning technique according to Claim 1, wherein in S2, correcting initial parameters specifically comprises:
correcting the initial parameters to realize registration of a coordinate system of a Lidar and a coordinate system of the electronic map to enable trajectories of tracks to overlap with actual railways in the coordinate system of the Lidar.

5. The active train obstacle detection method based on a positioning technique according to Claim 1 or 4, wherein the initial parameters comprise translations XYZ and rotations YPR.

6. The active train obstacle detection method based on a positioning technique according to Claim 1, wherein in S3, by performing parameter calibration of the video camera, a transformational relation between two-dimensional coordinates of images acquired by the video camera, three-dimensional coordinates of a real world and a coordinate system of a Lidar is figured out.

7. The active train obstacle detection method based on a positioning technique according to Claim 1, wherein in S4, detecting a train obstacle specifically comprises:
S401, acquiring point cloud data in front by a Lidar, acquiring image data in front by the camera, and inputting the point cloud data and the image data to an computing host;
S402, outputting a current position by a positioning module, finding a corresponding position in the electronic map by matching, and acquiring coordinates and attitude data of a positioning point according to the corresponding position;
S403, inquiring information of a rail operation region in front of the positioning point according to the coordinates of the positioning point and a direction of travel, obtaining data of the rail operation region in front of the positioning point, and forming a three-dimensional rail operation region;
S404, transforming the rail operation region into a coordinate system of the Lidar, plotting the rail operation region in a laser point cloud, and detecting whether there is an obstacle in the rail operation region by a point cloud processing algorithm;
S405, projecting the rail operation region into a coordinate system of a video image according to calibrated parameters of the video camera, plotting the rail operation region in the video image, and detecting whether there is an obstacle in the rail operation region by a video recognition algorithm; and
S406, fusing obstacle information output by the Lidar and obstacle information output by video recognition, outputting finally confirmed obstacle information, and sending the obstacle information to an interface module.

8. The active train obstacle detection method based on a positioning technique according to Claim 7, wherein in S402, if the positioning module is able to output attitude data, and the attitude data output by the positioning module are used.

9. The active train obstacle detection method based on a positioning technique according to Claim 7, wherein in S405, a video recognition module is able to directly run a rail operation region recognition algorithm to automatically recognize the information of the rail operation region and then run the video recognition algorithm to detect whether there is an obstacle in the rail operation region.

10. The active train obstacle detection method based on a positioning technique according to Claim 7, wherein the obstacle information output in S406 comprises a type, size, distance, direction and collision probability of an obstacle.

11. The active train obstacle detection method based on a positioning technique according to Claim 7, wherein in S5, the interface module gives a corresponding response according to obstacle recognition information, wherein the response comprises audible and visual alarming, whistling, normal braking, emergency braking, log recording, and remote message sending.

12. The active train obstacle detection method based on a positioning technique according to Claim 1, wherein in a case of multiple tracks, the active train obstacle detection method based on a positioning technique specifically comprises:
(a) acquiring, from a ground interlocking system, route information in front, figuring out a direction of a turnout from the route information, then determining a track where a train is about to run, and extending a rail operation region to the determined track; or
(b) determining the direction of the turnout by a video recognition method, and selecting a corresponding track, wherein the video camera is able to recognize, according to the position of a turnout gap, whether the turnout is located at a normal position or a reverse position and then inform a video recognition module and a Lidar detection module to select the corresponding track; and in a case of multiple turnouts, the turnouts are recognized in sequence to select the corresponding track.

13. A apparatus used for the active train obstacle detection method based on a positioning technique according to Claim 1, comprising a positioning module (1), a Lidar detection module (2), a video recognition module (3), an computing host (4) and an interface module (5), wherein the computing host (4) is connected to the positioning module (1), the Lidar detection module (2), the video recognition module (3) and the interface module (5) respectively.

14. The apparatus according to Claim 13, wherein the positioning module (1) is configured to acquire a real-time position of a train and adopts one or more positioning techniques, and the positioning techniques comprise GNSS positioning, Lidar-based SLAM positioning, video-based VSLAM positioning, dead-reckoning positioning based on inertia navigation equipment, and integrated positioning based on wheel speed sensors, beacon transponders and Doppler speed sensors.

15. The apparatus according to Claim 13, the Lidar detection module (2) is mounted in front of a vehicle and configured to acquire a three-dimensional scanning point cloud in front of the vehicle to determine a size, direction and distance of an obstacle.

16. The apparatus according to Claim 13, the video recognition module (3) is mounted in front of the vehicle and configured to acquire colored image information in front of the vehicle and transmit the colored image information to the computing host; the video recognition module (3) is able to automatically adjust exposure parameters according to a change in light intensity to ensure that a clear image is obtained.

17. The apparatus according to Claim 13, the computing host (4) is configured to process received positioning data, Lidar data and video image data and output an obstacle detection result to the interface module.

18. The apparatus according to Claim 13, the interface module (5) is configured to receive the obstacle detection result output by the computing host and perform corresponding operations, including audible and visual alarming, whistling and output braking, according to settings.

19. An electronic device, comprising a memory and a processor, a computer program being stored in the memory, wherein the processor implements the active train obstacle detection method according to any one of Claims 1-12 when executing the computer program.

20. A computer-readable storage medium, having a computer program stored therein, wherein the active train obstacle detection method according to any one of Claims 1-12 is implemented when the computer program is executed by a processor.
